# EUROPEAN PATENT APPLICATION

(11) **EP 2 343 459 A1**
(43) Veröffentlichungstag der Anmeldung: **13.07.2011**
(21) Anmeldenummer: 09750791.7
(22) Anmeldetag: 04.03.2009
(51) Int. Cl.: F16B 23/00, B25B 15/00

(54) **HOLZSCHRAUBE UND SCHRAUBENANTRIEB ZUM EINSCHRAUBEN UND LÖSEN DER HOLZSCHRAUBE**

(30) Priorität: 19.05.2008 KZ 20081457
(71) Anmelder: Dauletbayev, Nurlan, Kokshetau 020000 (KZ)
(72) Erfinder: Dauletbayev, Nurlan, Kokshetau 020000 (KZ)
(74) Vertreter: Jeck, Anton
(86) Internationale Anmeldenummer: PCT/KZ2009/000005
(87) Internationale Veröffentlichungsnummer: WO 2009/142469

(57) **Zusammenfassung**

Die Erfindung betrifft ein Handinstrument und ein mit einem Gewinde versehenes Befestigungsmittel. Die Erfindung gewährleistet einen langfristigen Betrieb von Schraubenzieher und Schrauben und eine Fertigungsgerechtheit ihrer Anwendung. Die Schraube besteht aus einem einen Falz aufweisenden Kopf und einem ein Gewinde aufweisenden Arbeitsende. Der Falz im Kopf für das Einführen des Schraubenziehers ist in der Art eines Schwalbenschwanzes ausgebildet. Das Arbeitsende des Schraubenziehers für das Hinein- und Herausschrauben der Schraube ist wie ein Spiegelbild des Falzes im Schraubenkopf mit Erhaltung desselben Neigungswinkels ausgebildet.

## Beschreibung

Die Erfindung betrifft Handinstrumente und Schrauben und kann im Alltagsleben, in der Landwirtschaft, in der Möbelindustrie, im Bau, das heißt, überall dort verwendet werden, wo Schrauben und entsprechende Schraubenzieher benutzt werden.

Schrauben sind weit bekannt, in denen die Falze, einschließlich kreuzförmiger Falze, und entsprechend die Arbeitsteile der Schraubenzieher konusförmig ausgebildet sind.

Die Anwendung solcher Schrauben erfordert ein Eingreifen mit erheblichen Mühen beim Hinein- und Herausdrehen, da der Winkel, unter dem der Schraubenfalz angeordnet ist, mehr als 90° beträgt. Daher ist eine sichere Kopplung der Schraube mit dem Schraubenzieher nicht gewährleistet. Die bei der Kopplung entstehende Abstoßungskraft führt zur Deformation der sich berührenden Oberflächen der Schraube und des Schraubenziehers und zum Abrutschen der Ränder des Schraubenfalzes und des Arbeitsteils des Schraubenziehers.

Die Aufgabe der Erfindung besteht darin, ein Paar Schraube-Schraubenzieher zu schaffen, das eine schnelle und sichere Arbeit bei der Montage und Demontage von Einrichtungen unter der Schraubenanwendung und eine Erhöhung der Häufigkeit der Schraubenanwendung gewährleistet.

Das erwartete, technische Ergebnis ist die Erhöhung der Lebensdauer der Schraubenzieher und Schrauben bei einer schnellen und qualitativen Montage und Demontage von Einrichtungen, in denen die Schrauben verwendet werden.

Dieses technische Ergebnis wird dadurch gewährleistet, dass der Falz in der Schraube in der Art eines Schwalbenschwanzes mit einem Neigungswinkel in die von der traditionellen Ausführung entgegengesetzte Seite angeordnet wird, wobei sich im Unterschied zu den traditionell verwendeten Schraubenzieher und Schrauben dementsprechend eine schlossförmige Kopplung des Paares Schraubenzieher-Schraube ergibt und wobei außerdem anstelle der Abstoßungskräfte bei der traditionellen Ausführung des Falzes in der Schraube und dem Arbeitsteil des Schraubenziehers zusätzliche Anziehungskräfte zwischen Schraube und Schraubenzieher entstehen.

Die Erfindung wird anhand eines Ausführungsbeispiels näher erläutert. Es zeigen:
- Fig. 1: eine Schraube gemäß der Erfindung und
- Fig. 2: ein Arbeitsteil eines des Schraubenziehers gemäß der Erfindung.

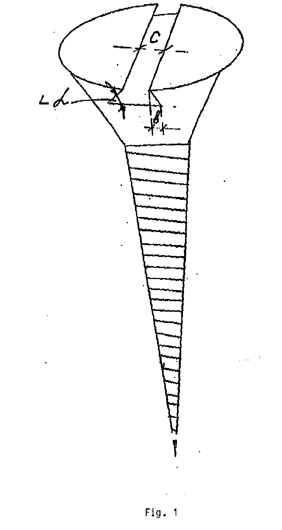

Im Schraubenkopf der Fig. 1 ist ein Falz in Form eines Schlitzes ausgebildet, der eine Höhe von 0,5-20 mm aufweist, wobei diese Höhe vom Schraubenumfang abhängt. Der Neigungswinkel der Falzseitenflächen (Falzränder) beträgt α<85°.

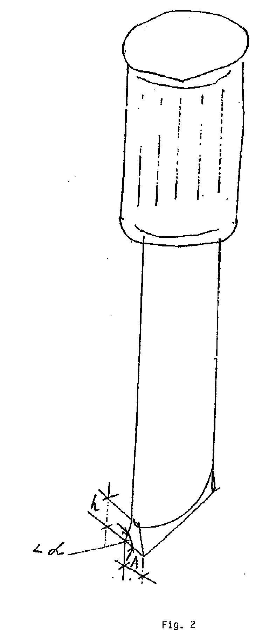

Der Arbeitsteil des Schraubenziehers in Fig. 2 wird wie ein Spiegelbild des Falzes im Schraubenkopf mit einer geringen Verminderung der Breite des unteren Arbeitsendes des Schraubenziehers (im Vergleich zu dem ähnlichen mit der Breite des Falzoberteils auf der Oberfläche der Schraube) mit einer kleinen Größe von 0,5...1,0 mm angeordnet. Dabei wird der Neigungswinkel α der Seitenfläche des Arbeitsteils des Schraubenziehers, wie auch die Seitenflächen im Schraubenfalz, auch in den Grenzen von α<85° angeordnet, nämlich gleich dem Neigungswinkel des Rands des Schraubenfalzes. Infolge des kleineren Umfangs des Arbeitsendes des Schraubenziehers ist das unmittelbare Einsetzen des Schraubenziehers von oben in den Schraubenfalz möglich.

Ein auf die angegebene Weise hergestelltes Paar Schraube-Schraubenzieher arbeitet ohne Abrutschen sicher, und es ist dabei nicht erforderlich, erhebliche Mühen für die Verhinderung der Entkopplung des Schraubenziehers von der Schraube aufzuwenden, da sich bei der Arbeit des Paares eine schlossförmige Kopplung ergibt.

Die Anwendung des Paares Schraube-Schraubenzieher gemäß der Erfindung führt dazu, die Zuverlässigkeit der Montage wesentlich zu verbessern, die Demontage zu beschleunigen, die Arbeitsproduktivität zu vergrößern und Betriebsverletzungen zu verringern,

## Patentansprüche

1. Schraube aus einem einen Falz aufweisenden Kopf und einem ein Schraubengewinde aufweisendes Arbeitsende,
**dadurch gekennzeichnet,**
**dass** der Falz des Schraubenkopfs für das Einführen des Schraubenziehers in der Art eines Schwalbenschwanzes angeordnet ist und eine Höhe von 0,5-20 mm aufweist, wobei der Neigungswinkel der Falzseitenflächen α<85° zur Oberfläche des Schraubenkopfs beträgt.

2. Schraubenzieher für das Hinein- und Herausschrauben der Schraube nach Anspruch 1,
**dadurch gekennzeichnet,**
**dass** das Arbeitsende des Schraubenziehers wie ein Spiegelbild des Falzes im Schraubenkopf mit Erhaltung desselben Neigungswinkels ausgebildet ist, wobei der Umfang des Arbeitsendes um 0,5-1,0 mm geringer als der Umfang des Falzes im Schraubenkopf ist.
